# EUROPEAN PATENT APPLICATION

(11) **EP 2 515 038 A1**
(43) Date of publication of application: **24.10.2012**
(21) Application number: 11163442.4
(22) Date of filing: 21.04.2011
(51) Int. Cl.: F23C 10/00, F23C 99/00

(54) **Fixed bed chemical looping combustion**

(71) Applicant: Nederlandse Organisatie voor Toegepast -Natuurwetenschappelijk Onderzoek TNO, 2628 VK Delft (NL)
(72) Inventor: Geerdink, Peter, 2628 VK Delft (NL); Van den Broeke, Leo Jacques Pierre, 2628 VK Delft (NL); Huizinga, Arjen, 2628 VK Delft (NL); Jahn, Judith, 2628 VK Delft (NL); Van den Bos, Willempje Antonie Patricia, 2628 VK Delft (NL)
(74) Representative: Jansen, Cornelis Marinus

(57) **Abstract**

The invention is directed to a process for fixed bed chemical looping combustion and to a process for regulating the heat and the carbon dioxide concentration of the air in an enclosed space within which plants and/or crops are grown.

The process for fixed bed chemical looping combustion comprises:
- passing a gas stream comprising fuel gas over a first fixed bed material; and thereafter
- passing at least part of the gas stream over a second fixed bed material different from said first fixed bed material,

wherein both the first fixed bed material and the second fixed bed material comprise a metal or metal oxide, and wherein the reactivity of the metal or metal oxide has a reaction rate for conversion of the fuel gas which is higher than the reaction rate for conversion of the fuel gas of the metal or metal oxide in the first fixed bed material.

## Description

The invention is directed to a process for fixed bed chemical looping combustion and to a process for regulating the heat and the carbon dioxide concentration of the air in an enclosed space. A typical example of this is greenhouses where plants and/or crops are grown.

The process called chemical looping combustion (CLC) is based on combustion with the use of an intermediate oxygen carrier that is generally cycled between two reactors, *i.e.* an oxidising reactor and a reducing reactor. In the oxidising reactor, metal particles are brought into contact with air to produce metal oxides and heat, which can subsequently be transformed into electricity. The reducing reactor contacts the fuel, in general methane, with the metal oxides to create metal once again and also CO₂ and water, while chemically storing the energy of the methane. In the reducing reaction, no heat is produced (Hossain et al., Chemical engineering science 2008, 63, 4433-4451).

Most research is focussed on an application of CLC using fluidised beds. Generally, fluidised bed technology is proven in industry in combustion processes. The inventors, however, focus on a fixed bed application of CLC. In fluidised beds, cycle times, attrition and fuel conversion are key factors. Most research is therefore based on finding the ideal oxygen carrier that has a long lifetime and high reactivity. These oxygen carriers will therefore be expensive, custom made materials. When a fixed bed is used, the main challenges are to avoiding cokes formation and sintering. Cokes formation makes oxygen carriers unavailable and blocks the bed. Sintering means coagulation of the metal particles, which limits available oxygen carrier surface. Besides this, the use of inexpensive materials is key to the development of CLC, since it is important to make the whole system financially feasible, because the cycle times in fixed beds are much longer and therefore more oxygen carrier is required for a system.

A small scale CLC setup for the use in greenhouses is described in WO-A-2006/123925. This describes a method for regulating the heat and the CO₂ concentration of the air in greenhouses. At night and during cold periods heat is required in greenhouses to keep the temperature at a desired level. During the day and during warm periods, CO₂ is required to increase the plant production rate. Conventionally, natural gas is burned for greenhouses to produce CO₂ during the day and during warm periods. At the same time, the produced heat is stored in the form of hot water using a buffer. The heat stored in the water buffers is then used at night or during cold periods. In this way, by combining the production of CO₂ with the storage of heat, energy losses are reduced. However, a more optimal solution is possible when the heat and the CO₂ are available when needed. This requires that the production of heat and CO₂ are decoupled, which is possible using CLC in a fixed bed configuration. In accordance with the method described in WO-A-2006/123925 an oxygen-containing gas and a hydrocarbon-containing gas are alternately passed over particles that are capable of binding oxygen, but instead of a hydrocarbon containing gas also a fuel gas, syngas or pure hydrogen could be used. The oxygen-containing gas oxidises the particles while releasing heat, while the fuel gas, most of the hydrocarbon-containing gas, reduces the oxidised particles under formation of water and CO₂. In accordance with this process, the CO₂ production and the heat production are separated, while losses are minimised.

In the process of WO-A-2006/123925 a number of packed-bed CLC reactors are placed in parallel, such that the oxidation and reduction step can be performed independently. As a result, a system is obtained with a large flexibility in the amount of CO₂ and/or heat that can be produced at a specific moment. This allows an optimal adaptation of greenhouses to the varying weather conditions. Storage of heat in a CLC packed-bed reactor can be achieved without any significant losses.

As in all CLC processes, the oxygen carrier plays a vital role in optimising the performance of the process. It is important that the capacity of the oxygen carrier is high, because a large buffer capacity is desired. For a packed bed configuration the reactivity of the oxygen carrier is less important, because in a packed bed the fuel has a much longer contact time with the oxygen carrier, as compared to the situation of a fluidised bed. Another factor that plays a critical role is the price of the oxygen carrier. In order to store a large amount of heat in the packed bed, a large amount of oxygen carrier is required.

Different oxygen carriers for fixed bed chemical looping combustion are known. Normally the oxygen carriers comprise a metal. Some metals are more advantageous than others, depending on the specific needs. Iron, for example, has a low reactivity, a high melting point and a low price. Copper has an exothermic reduction reaction with methane and is very reactive, but has a low melting point and is much more expensive than iron. Nickel is very reactive and has a very high melting point, but is very expensive and highly toxic. In view of the above, it has been proposed in the art to use two metals in combination as core-shell particles (Corbella, et al. in Fuel 2007, 86, 113-122).

Nonetheless, the prior art solutions either suffer from incomplete conversion and slip of carbon monoxide (and/or fuel gas), or are very expensive and/or use toxic particles, such as nickel. Objective of the invention is therefore to address this drawback observed in the prior art, and to provide a process for fixed bed chemical looping combustion with excellent conversion of the fuel gas. Further objective of the invention is to achieve excellent conversion of the fuel gas using a low cost bed filling.

The inventors found that one or more of these objective can at least in part be met by subsequently passing the fuel gas over two different bed materials.

Accordingly, in a first aspect the invention is directed to a process for fixed bed chemical looping combustion, comprising
- passing a gas stream comprising fuel gas over a first fixed bed material; and thereafter
- passing at least part of the gas stream over a second fixed bed material different from said first fixed bed material,
wherein both the first fixed bed material and the second fixed bed material comprise a metal or metal oxide, and wherein the metal or metal oxide in the second fixed bed material has a reaction rate for conversion of the fuel gas which is higher than the reaction rate for conversion of the fuel gas of the metal or metal oxide in the first fixed bed material.

By first passing the gas stream over a bed that has a relatively low reaction rate for fuel gas conversion and thereafter over a bed that has a relatively high reaction rate for fuel gas conversion, incompletely converted fuel gas can still be converted. Advantageously, the less reactive fixed bed materials are typically the less expensive materials, while the more reactive materials are typically the more expensive materials. This allows combining a relatively cheap and large bulk first fixed bed having a relatively low reaction rate with a relatively expensive and small second fixed bed having a relatively high reaction rate.

The inventors additionally found that simple mixing of the first and second fixed bed material does not give rise to the same desirable effects. In fact, the slip of unconverted gases (such as carbon monoxide) hardly changes when simply preparing a mixed bed of particles with relatively low and relatively high reaction rates for fuel gas conversion. Surprisingly, the conversion of the fuel gas is significantly increased when the two different fixed bed materials are divided in two separate beds. Unconverted fuel gas that passes the first bed having a lower reaction rate for fuel gas conversion, is then further converted in the bed having a higher reaction rate for fuel gas conversion. Moreover, a mixed bed of particles with relatively low and relatively high reaction rates for fuel gas conversion has the disadvantage that the maximum operating temperature is determined by the lowest melting temperature. Accordingly, separating the different bed materials in different beds will lead to an increase in the degrees of freedom and accordingly widens the application potential, for instance as regards beds with differing lengths.

Although the invention is defined by means of a first and second fixed bed material, this does not necessarily mean that the first fixed bed material is the material which the gas stream passes first, nor does it necessarily mean that the second fixed bed material is the material which the gas stream passes second. One or more fixed beds may be used prior to the fixed bed containing the first fixed bed material in accordance with the process of the invention.

The fixed bed material of the first bed can comprise one or more materials selected from the group consisting of iron, ilmenite, oxide scales and blast furnace pellets. These metals may also be present in oxidised form. Preferably, the first fixed bed material comprises iron.

The fixed bed material of the second fixed bed material can comprise one or more selected from the group consisting of copper, nickel, manganese, and cobalt. These metals may also be present in oxidised form. Preferably, the second fixed bed material comprises copper.

Preferably the first fixed bed material comprises iron and the second fixed bed material comprises copper.

Normally, the metal or metal oxide in the first fixed bed and/or in the second fixed bed is (are) present in the form of particles. The metal or metal oxide particles typically have an average particle size in the range of 5-500 µm, as determined by laser light diffraction/scattering.

Both the first and the second fixed bed material comprise a metal or metal oxide. Apart from the metal or metal oxide the first and/or second fixed bed material may comprise one or more further components. Such components, for instance, include inert particles, such as silica, silica carbide, ceramic, and glass particles.

In a preferred embodiment, the first fixed bed material and/or the second fixed bed material comprise, next to the metal or metal oxide, an inert particulate material. The inert particulate material may be divided in a first part having an average particle size larger than the average particle size of the metal or metal oxide, and a second part having an average particle size smaller than the metal or metal oxide. This embodiment is advantageous, since the larger inert particles lower the pressure drop over the fixed bed, while the smaller inert particles prevent, or at least reduce, sintering of the metal or metal oxide particles.

In an embodiment, 40-90 wt.% of the first fixed bed is a metal or metal oxide having a melting point of at least 1300 °C, preferably 50-90 wt.% of said first fixed bed material is a metal or metal oxide having a melting point of at least 1300 °C. Similarly, the second fixed bed material may consist for 40-90 wt.% of a metal or metal oxide having a melting point of at least 1000 °C. Preferably, the second fixed bed material consists for 50-90 wt.% of a metal or metal oxide having a melting point of at least 1000 °C. In particular, when the higher reactive metal or metal oxide in the second fixed bed material has a relatively low melting point, it can be advantageous to apply a first fixed bed material comprising a lower reactive metal or metal oxide with a relatively high melting point. In this way the limiting factor of melting point in the second fixed bed material may be compensated by the first fixed bed material.

An example of such a configuration can be a first fixed bed, with particles having a melting point of at least 1300 °C (for example using iron-based oxygen carrier particles), and a second fixed bed, with particles having a melting point of at least 1000 °C (for example using copper-based oxygen carrier particles).

It is possible that the process of the invention is performed in plural reactors. For instance, the first fixed bed material and the second fixed bed material may be contained in two different reactors, e.g. placed in series. In a further embodiment, the process of the invention is performed in a single reactor. In that case, the first fixed bed material and the second fixed bed material are contained in the same reactor, on top of each other. Optionally, the two beds in the same reactor may be spaced apart or the first and second fixed bed material may be separated by one or more further bed materials.

In a preferred embodiment, the gas stream is passed over the second fixed bed material directly after having passed over the first fixed bed material, without passing over any other bed in between the first and second fixed bed materials.

The gas having passed over the second fixed bed material may be recycled. Hence, in an embodiment, the process of the invention further comprises
- passing at least part of the gas stream leaving the second fixed bed material over a third fixed bed material; and thereafter
- passing at least part of the gas stream over a fourth fixed bed material different from the third fixed bed material,
wherein both the third fixed bed material and the fourth fixed bed material comprise a metal or metal oxide, and wherein the reactivity of the metal or metal oxide in the fourth mixed bed material is higher than the reactivity of the metal or metal oxide in the third fixed bed material.

Optionally, fresh fuel gas may be added to at least part of the gas stream leaving the second fixed bed prior to passing the gas stream over the third fixed bed material.

The third fixed bed material may be the same as the first fixed bed material, and/or the fourth fixed bed material may be the same as the second fixed bed material. In a preferred embodiment, third fixed bed material is the first fixed bed material, and the fourth fixed bed material is the second fixed bed material. Hence, in that case at least part of the gas having passed the second fixed bed material is recycled to the first fixed bed material.

The fuel gas can comprise a hydrocarbon containing gas and preferably comprises one or more selected from the group consisting of methane, ethane, propane, butane, and ethylene. The fuel gas can also comprise hydrogen gas. In an embodiment, the fuel gas preferably comprises natural gas, biogas or blast furnace gas.

Since the reactivity of the second fixed bed material is higher than that of the first fixed bed material, any unconverted components in the gas stream leaving the first fixed bed material are highly likely to be converted while passing the second fixed bed material. Typically, in a process for fixed bed chemical looping combustion, the amount of unconverted carbon monoxide in the gas stream leaving the overall fixed bed is considerably reduced in accordance with the invention. Hence, the gas stream leaving the second fixed bed material can have a carbon monoxide content of less than 500 ppm, preferably less than 200 ppm, such as in the range of 5-50 ppm.

Normally, the weight ratio between the amount of first fixed bed material applied to the amount of second fixed bed material applied in the process of the invention is 1 or more. For example, the weight ratio between the amount of first fixed bed material and the amount of second fixed bed material can be between 10:1 and 1:1, preferably between 5:1 and 2:1. Typically, the first fixed bed material is a relatively cheap material while the second fixed bed material is a more expensive material.

In accordance with the process of the invention, the gas stream is normally passed over the first fixed bed material at a temperature in the range of 500-1000 °C. The pressure in the first fixed bed material is normally in the range of 200 000 - 300 000 Pa. The gas stream is normally passed over the second fixed bed material at a temperature in the range of 700-1000 °C. The pressure in the second fixed bed material is normally in the range of 100 000 - 200 000 Pa.

The process of the invention can be advantageously applied for conditioning of an enclosed space within which plants and/or crops are grown.

Hence, in a further aspect the invention is directed to a process for regulating the heat and the carbon dioxide concentration of the air in an enclosed space within which plants and/or crops are grown, comprising subsequently
i) passing a gas stream comprising fuel gas over a first fixed bed material;
ii) passing at least part of the gas stream leaving step i) over a second fixed bed material different from said first fixed bed material;
iii) passing a gas stream comprising oxygen over the first fixed bed material;
iv) passing at least part of the gas stream leaving step iii) over the second fixed bed material;
v) return to step i)
wherein both the first fixed bed material and the second fixed bed material comprise a metal or metal oxide, and wherein the reactivity of the metal or metal oxide in the second fixed bed material is higher than reactivity of the metal or metal oxide in the first fixed bed material, and wherein the gas stream comprising oxygen is passed over the fixed bed materials under conditions whereby metal or metal oxide are oxidised and heat is released, after which part of the heat is provided to the enclosed space, and wherein the gas stream comprising fuel gas is passed over the fixed bed materials under conditions whereby metal or metal oxide is chemically reduced and water and carbon dioxide are formed, after which at least part of the formed carbon dioxide is provided to the enclosed space.

In accordance with the present invention, the conversion of the hydrocarbon-containing gas, which is the fuel gas, to carbon dioxide is highly efficient.

The oxidation and reduction of metal or metal oxide is preferably carried out in a single reactor, whereby the oxygen-containing gas and hydrocarbon-containing gas are alternately passed over the reactor, which comprises the first fixed bed material and the second fixed bed material. However, it is also possible that the oxidation and reduction of the metal or metal oxide are carried out in separate reactors each comprising the first fixed bed material and the second fixed bed material, and the oxygen-containing gas and hydrocarbon-containing gas are periodically switched for establishing oxidation and chemical reduction of metal or metal oxide in each of the respective reactors.

Preferably, the carbon dioxide production occurs when photosynthesis takes place in the enclosed space. Generally, this will be during the day or in the evening when assimilation lighting is used. The enclosed space is preferably a greenhouse, as used, for instance, in horticulture under glass.

Next, the invention will be illustrated in more detail by the following Examples.

### Examples

### Example 1

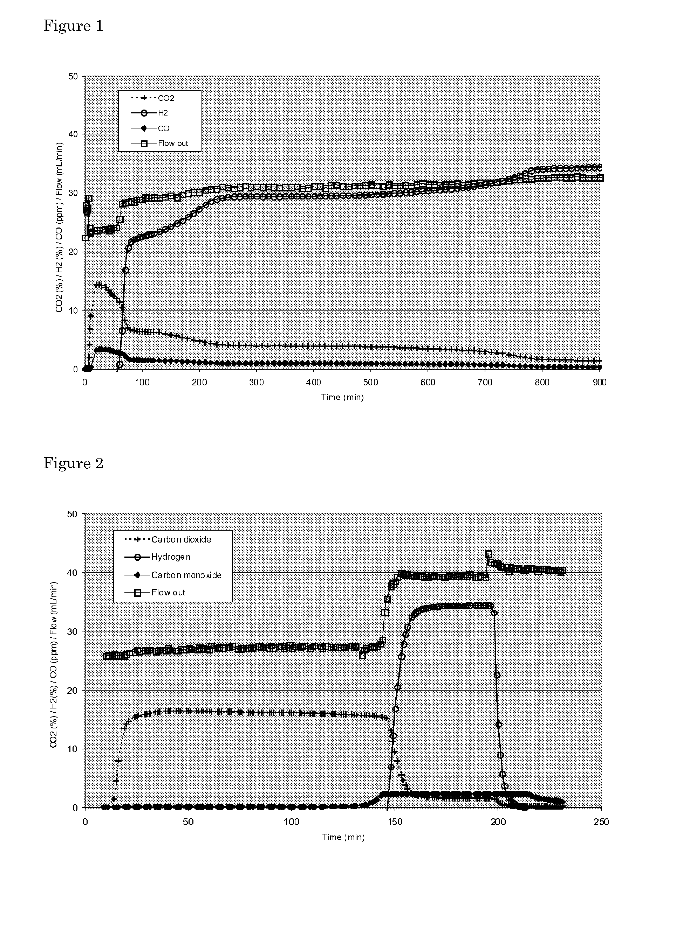

A gaseous mixture of syngas (50 vol.%) and nitrogen (50 vol.%) was passed over a fixed bed at a flow rate of 40 ml/min and a temperature of 700 °C. The fixed bed contained a mixture of iron and sand particles. In Figure 1, the carbon dioxide fraction, the hydrogen fraction, the carbon monoxide concentration in ppm, and the total flow out of the reactor are depicted as function of the time. As can be seen in Figure 1, the hydrogen profile shows three levels for the iron states (corresponding to the following three transitions Fe₂O₃ → Fe₃O₄ → FeO → Fe).

### Example 2

A gaseous mixture of syngas (50 vol.%) and nitrogen (50 vol.%) was passed over a fixed bed at a flow rate of 40 ml/min and a temperature of 700 °C. The fixed bed contained a mixture of copper and sand particles. In Figure 2, the carbon dioxide fraction, the hydrogen fraction, the carbon monoxide concentration in ppm, and the total flow out of the reactor are depicted as function of the time. As shown in Figure 2, the hydrogen profile shows a smooth breakthrough curve for hydrogen gas, as is desired for efficient operation

### Example 3

A gaseous mixture of syngas (50 vol.%) and nitrogen (50 vol.%) was passed over a fixed bed at a flow rate of 40 ml/min and a temperature of 700 °C. The fixed bed had a top section of a mixture of copper and sand particles, and a bottom section of a mixture of iron and sand particles.

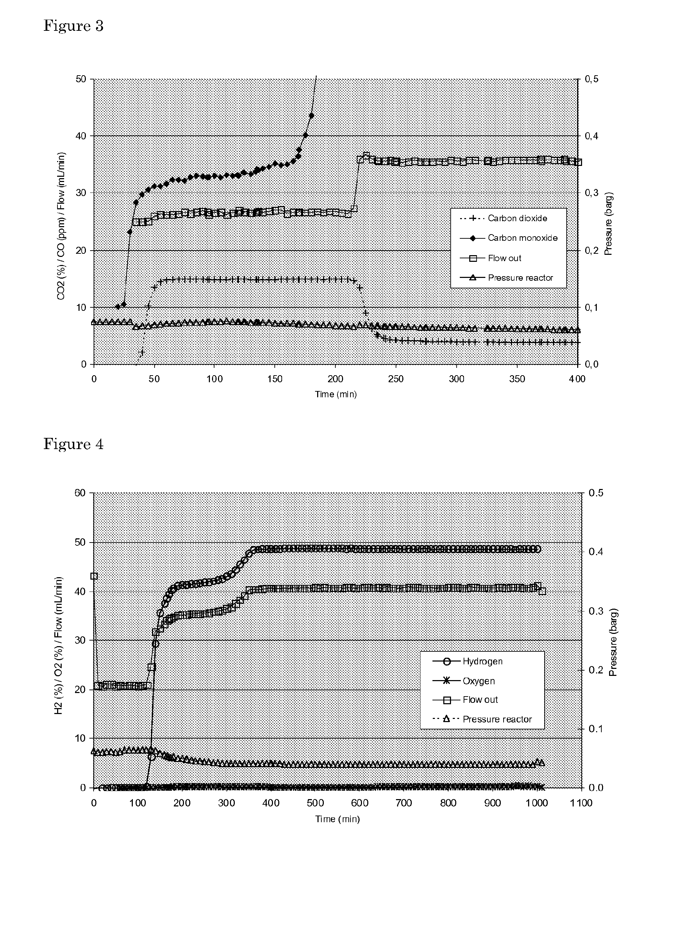

In Figure 3, the carbon dioxide fraction, the carbon monoxide concentration in ppm, the total flow out of the reactor and the pressure (right y-axis) are depicted as function of the time.

### Example 4

A gaseous mixture of syngas (50 vol.%) and nitrogen (50 vol.%) was passed over a fixed bed at a flow rate of 40 ml/min and a temperature of 700 °C. The fixed bed contained a mixture of copper, iron and sand particles in one and the same bed.

In Figure 4 the hydrogen fraction, the oxygen fraction, the total flow out of the reactor and the pressure (right y-axis) are depicted as function of the time. For this situation the breakthrough curve of hydrogen gas resembles the case of pure iron (see Figure 1). There are different levels for the hydrogen gas concentration, which is not the preferred situation.

## Claims

1. Process for fixed bed chemical looping combustion, comprising:
- passing a gas stream comprising fuel gas over a first fixed bed material; and thereafter
- passing at least part of the gas stream over a second fixed bed material different from said first fixed bed material,
wherein both the first fixed bed material and the second fixed bed material comprise a metal or metal oxide, and wherein the metal or metal oxide in the second fixed bed has a reaction rate for conversion of the fuel gas which is higher than the reaction rate for conversion of the fuel gas of the metal or metal oxide in the first fixed bed material.

2. Process according to claim 1, wherein the first fixed bed material comprises one or more selected from the group consisting of iron, ilmenite, oxide scales, blast furnace pellets or other low reactive transition metals, preferably said first fixed bed material comprises iron.

3. Process according to claim 1 or 2, wherein the second fixed bed material comprises one or more selected from the group consisting of copper, nickel, manganese or other highly reactive transition metals, preferably said second fixed bed material comprises copper.

4. Process according to any one of claims 1-3, wherein 40-90 wt.% of said first fixed bed material is a metal or metal oxide having a melting point of at least 1300 °C, preferably 50-90 wt.% of said first fixed bed material is a metal or metal oxide having a melting point of at least 1300 °C.

5. Process according to any one of claims 1-4, wherein 40-90 wt.% of said second fixed bed material is a metal or metal oxide having a melting point of at most 1000 °C, preferably 50-90 wt.% of said second fixed bed material is a metal or metal oxide having a melting point of at most 1000 °C.

6. Process according to any one of claims 1-5, wherein said first fixed bed material is contained in a first reactor and said second fixed bed material is contained in a second reactor.

7. Process according to any one of claims 1-5, wherein said first fixed bed material is contained in the same reactor as said second fixed bed material.

8. Process according to any one of claims 1-7, further comprising
- passing at least part of the gas stream leaving the second fixed bed material over a third fixed bed material; and thereafter
- passing the gas stream over a fourth fixed bed material different from said third fixed bed material,
wherein both the third fixed bed material and the fourth fixed bed material comprise a metal or metal oxide, and wherein the reactivity of the metal or metal oxide in the fourth fixed bed material is higher than reactivity of the metal or metal oxide in the third fixed bed material.

9. Process according to claim 8, wherein the third fixed bed material is the same as the first fixed bed material, and/or wherein the fourth fixed bed material is the same as the second fixed bed material.

10. Process according to any one of claims 10, wherein fuel gas is added to at least part of the gas stream leaving the second fixed bed prior to passing said gas stream over the third fixed bed material.

11. Process according to any one of claims 1-9, wherein said fuel gas comprises one or more of the group consisting of a hydrocarbon containing gas, methane, ethane, propane, butane, ethylene, hydrogen gas, natural gas, biogas, or blast furnace gas.

12. Process according to any one of claims 1-11, wherein said first fixed bed material comprises iron and said second fixed bed material comprises copper.

13. Process according to any one of claims 1-12, wherein the gas stream leaving the second fixed bed material has a carbon monoxide content of less than 500 ppm, preferably less than 200 ppm, such as in the range of 5-560 ppm.

14. Process according to any one of claims 1-15, wherein the weight ratio between the amount of first fixed bed material and the amount of second fixed bed material is between 10:1 and 1:1, preferably between 5:1 and 2:1.

15. Process for regulating the heat and the carbon dioxide concentration of the air in an enclosed space within which plants and/or crops are grown, comprising subsequently
i) passing a gas stream comprising fuel gas over a first fixed bed material;
ii) passing at least part of the gas stream leaving step i) over a second fixed bed material different from said first fixed bed material;
iii) passing a gas stream comprising oxygen over the first fixed bed material;
iv) passing at least part of the gas stream leaving step iii) over the second fixed bed material;
v) return to step i)
wherein both the first fixed bed material and the second fixed bed material comprise a metal or metal oxide, and wherein the reactivity of the metal or metal oxide in the second fixed bed material is higher than reactivity of the metal or metal oxide in the first fixed bed material, and wherein the gas stream comprising oxygen is passed over the fixed bed materials under conditions whereby metal or metal oxide are oxidised and heat is released, after which part of the heat is provided to the enclosed space, and
wherein the gas stream comprising fuel gas is passed over the fixed bed materials under conditions whereby metal or metal oxide is chemically reduced and water and carbon dioxide are formed, after which at least part of the formed carbon dioxide is provided to the enclosed space.
